# EUROPÄISCHE PATENTANMELDUNG

(11) **EP 1 736 752 A1**
(43) Veröffentlichungstag der Anmeldung: **27.12.2006**
(21) Anmeldenummer: 06011703.3
(22) Anmeldetag: 07.06.2006
(51) Int. Cl.: G01N 1/12

(54) **Trägerrohr für Sensoren oder Probennehmer**

(30) Priorität: 22.06.2005 DE 102005029220
(71) Anmelder: Heraeus Electro-Nite International N.V., 3530 Houthalen (BE)
(72) Erfinder: Plessers, Jacques, 3530 Houthalen-Helchteren (BE); Biesmans, William, 3690 Zutendaal (BE)
(74) Vertreter: Kühn, Hans-Christian

(57) **Zusammenfassung**

Die Erfindung betrifft ein Trägerrohr für Sensoren oder Probennehmer zur Anwendung in Metall- oder Kryolithschmelzen und besteht darin, dass es an seiner Außenseite Längsrillen und/oder sich in Längsrichtung erstreckende ebene Flächen aufweist.

## Beschreibung

Die Erfindung betrifft ein Trägerrohr für Sensoren oder Probennehmer zur Anwendung in Metall- oder Kryolithschmelzen.

Aus dem deutschen Gebrauchsmuster G 75 07 605 ist eine Isolierhülse für Messlanzen bekannt, die aus einem gepressten Gemisch aus Cellulose und einem Bindemittel gebildet ist. Weitere Trägerrohre sind aus DE 103 59 449 B3 bekannt.

Sensoren mit derartigen Trägerrohren werden in größerer Zahl zusammen verpackt. Dabei ergibt sich häufig das Problem, dass die Trägerrohre nicht stabil gelagert oder verpackt werden können. Trägerrohre mit einer glatten Oberfläche neigen auch zum Rutschen bei der Handhabung, aufgrund einer geringen Haftreibung.

Der Erfindung liegt die Aufgabe zugrunde, ein verbessertes Trägerrohr für Sensoren oder Probennehmer, insbesondere zur Anwendung in Metall- oder Kryolithschmelzen zur Verfügung zu stellen. Die Erfindung wird dadurch gelöst, dass das Trägerrohr an seiner Außenseite mehrere Längsrillen und/oder sich in Längsrichtung erstreckende ebene Flächen aufweist. Dadurch kommen nebeneinander angeordnete Trägerrohre nicht nur längs einer Linie ihrer üblicherweise zylinderförmigen Mantelfläche miteinander in Berührung, sondern sie liegen großflächig aneinander an. Dadurch erhöht sich die Haftreibung. Des weiteren ist eine Drehbewegung bei Ineinandergreifen der Längsrillen bzw. der zwischen Längsrillen angeordneten Längswülste bzw. bei aneinander liegenden ebenen Flächen nicht möglich, so dass eine stabile Lagerung, Verpackung und Handhabung gewährleistet ist. Vorzugsweise sind die Längsrillen und/oder ebenen Flächen dabei gleichmäßig über den Umfang des Trägerrohres angeordnet. Insbesondere ist es zweckmäßig, dass das zwischen jeweils zwei Längsrillen angeordnete Material des Trägerrohres (Längswülste) radial nach außen gerichtet einen ebensolchen Querschnitt aufweist, wie die Längsrillen, radial nach innen gerichtet. Dadurch ist eine exakte Passform der Oberflächenstruktur zweier nebeneinander angeordneter Trägerrohre möglich.

Vorteilhaft ist es ebenso, dass die ebenen Flächen in ihrem Verlauf längs des Trägerrohres nicht durch über die Fläche hinausragende Konstruktionsstrukturen unterbrochen sind, um ein vollflächiges Aneinanderanliegen zu ermöglichen. Des weiteren ist es vorteilhaft, dass das Trägerrohr an seiner Innenseite Längsrillen aufweist, beispielsweise um einen Messkopf oder eine Probenkammer sicherer zu haltern. Auch ein Stopfen kann vorzugsweise an mindestens einem Ende des Trägerrohres angeordnet sein, wobei der Stopfen an seinem im Trägerrohr angeordneten Teil seiner Außenseite Längsrillen aufweisen kann. Der Stopfen ist vorzugsweise kraftschlüssig mit dem Trägerrohr verbunden. Insbesondere kann an oder in dem Stopfen mindestens ein Sensor oder eine Probenkammer angeordnet sein.

Des weiteren ist es von Vorteil, dass das Trägerrohr aus einer Mischung eines pflanzlichen Fasermaterials mit Stärke und/oder Protein gebildet ist, insbesondere dass es auf Holz- oder Cellulosebasis gebildet ist.

Das Trägerrohr kann durch Extrudieren auf einfache und preiswerte Weise hergestellt werden.

Nachfolgend werden Ausführungsbeispiele der Erfindung anhand einer Zeichnung erläutert. In der Zeichnung zeigt
- Figur 1: ein Trägerrohr mit einem Stopfen
- Figur 2: ein weiteres Trägerrohr mit Stopfen
- Figur 3a ― 3d: verschiedene Trägerrohrquerschnitte.

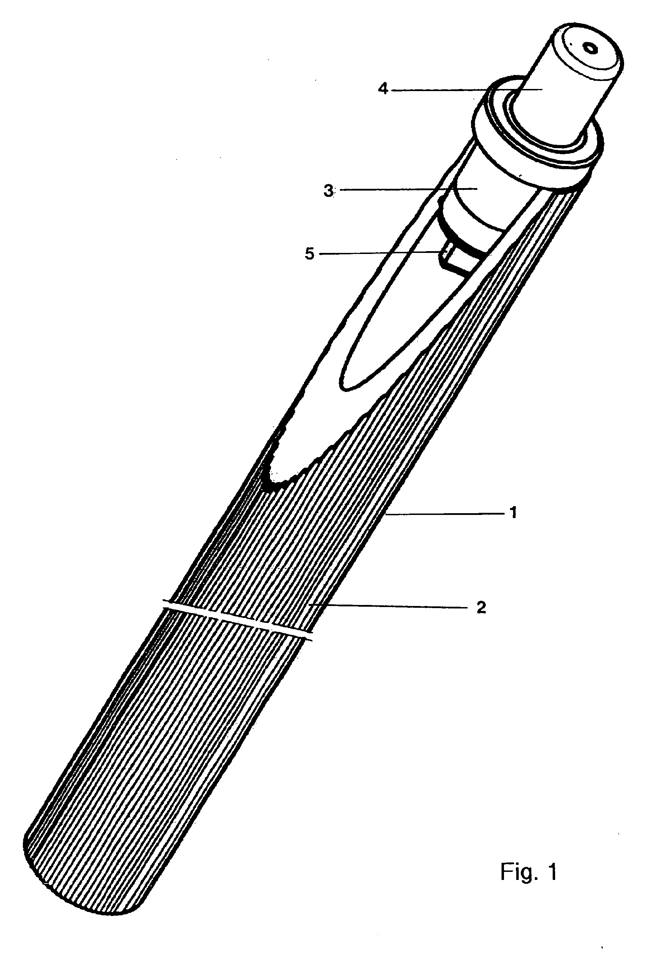

Das in Figur 1 dargestellte Trägerrohr 1 (teilweise geschnittene Darstellung) weist eine Vielzahl gleichmäßig über seinen Umfang verteilte Längsrillen 2 auf. An seinem einen Ende trägt das Trägerrohr einen Messkopf 3, der kraftschlüssig an der Innenseite des Trägerrohres 1 gehalten ist. Der Messkopf 3 weist unter einer Schutzkappe 4 mehrere Sensoren auf, die mittels eines Konnektorstückes 5 mit durch das Trägerrohr 1 hindurch geführten Messleitungen zur Weiterleitung der Messsignale verbunden werden kann.

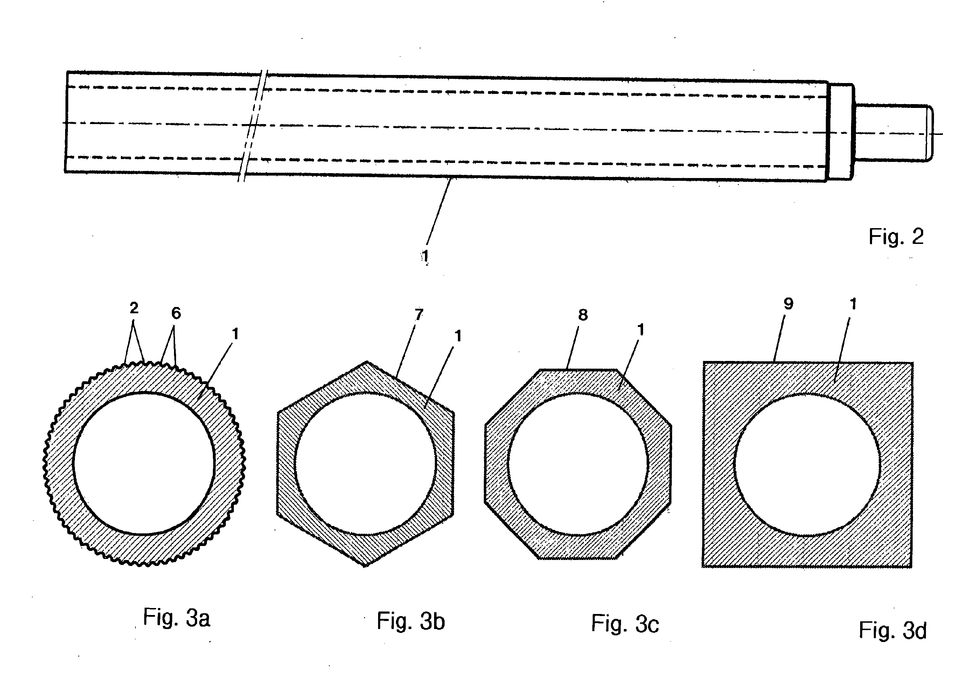

Figur 2 zeigt einen Längsschnitt durch ein Trägerrohr 1, in den Figuren 3 a - 3 d sind einige beispielhafte Querschnitte für das Trägerrohr 1 dargestellt. In Figur 3 a ist ein Querschnitt durch ein Trägerrohr gemäß Figur 1 dargestellt, welches gleichmäßig um seinen Umfang herum verteilte Längsrillen 2 aufweist. Zwischen den Längsrillen 2 sind naturgemäß Wülste 6 angeordnet. Die Wülste 6 weisen, radial nach außen gerichtet, einen ebensolchen Querschnitt auf, wie die Längsrillen 2, radial nach innen gerichtet. Durch diese Anordnung greifen zwei nebeneinander liegende Trägerrohre 1 formschlüssig ineinander, ein Verdrehen gegeneinander ist nicht mehr möglich. Die in den Figuren 3 b - 3 d dargestellten Querschnittsflächen der Trägerrohre 1 zeigen ebene Flächen 7; 8; 9. Optimal werden Trägerrohre 1 mit einer gleichen Anzahl ebener Außenflächen 7; 8; 9 miteinander verpackt. Die dadurch mögliche Packungsanordnung sichert, dass die Rohre nicht gegeneinander verdrehbar sind und stabil gestapelt und verpackt werden können. Auch bei der Handhabung ist ein Verdrehen, beispielsweise in der Hand einer Bedienperson, nicht möglich.

## Patentansprüche

1. Trägerrohr für Sensoren oder Probennehmer zur Anwendung in Metall- oder Kryolithschmelzen, **dadurch gekennzeichnet, dass** es an seiner Außenseite Längsrillen aufweist und dass das zwischen jeweils zwei Längsrillen angeordnete Material des Trägerrohres radial nach außen gerichtet einen ebensolchen Querschnitt aufweist wie die Längsrillen, radial nach innen gerichtet.

2. Trägerrohr nach Anspruch 1, **dadurch gekennzeichnet, dass** die Längsrillen gleichmäßig über den Umfang des Trägerrohres angeordnet sind.

3. Trägerrohr nach Anspruch 1 oder 2, **dadurch gekennzeichnet, dass** es an seiner Innenseite Längsrillen aufweist.

4. Trägerrohr nach einem der Ansprüche 1 bis 3, **dadurch gekennzeichnet, dass** es an mindestens einem Ende einen Stopfen aufweist, der an seiner im Trägerrohr angeordneten Außenseite Längsrillen aufweist.

5. Trägerrohr nach Anspruch 4, **dadurch gekennzeichnet, dass** der Stopfen kraftschlüssig mit dem Trägerrohr verbunden ist.

6. Trägerrohr nach Anspruch 4 oder 5, **dadurch gekennzeichnet, dass** an oder in dem Stopfen mindestens ein Sensor oder eine Probenkammer angeordnet ist.

7. Trägerrohr nach einem der Ansprüche 1 bis 6, **dadurch gekennzeichnet, dass** es aus einer Mischung eines pflanzlichen Fasermaterials mit Stärke und/oder Protein gebildet ist.

8. Trägerrohr nach Anspruch 7, **dadurch gekennzeichnet, dass** es auf Holz- oder Cellulosebasis gebildet ist.

9. Verfahren zur Herstellung eines Trägerrohres nach einem der Ansprüche 1 bis 8, **dadurch gekennzeichnet, dass** es extrudiert wird.
